# EUROPÄISCHE PATENTSCHRIFT

(11) **EP 1 998 992 B1**
(45) Veröffentlichungstag und Bekanntmachung des Hinweises auf die Patenterteilung: **25.04.2018**
(21) Anmeldenummer: 07704218.2
(22) Anmeldetag: 30.01.2007
(51) Int. Cl.: B60K 6/48, B60W 20/11, B60W 10/06, B60W 10/08, B60W 20/00

(54) **VERFAHREN ZUM BETREIBEN EINES HYBRIDFAHRZEUGS**
METHOD FOR OPERATING A HYBRID VEHICLE
PROCEDE POUR FAIRE FONCTIONNER UN VEHICULE HYBRIDE

(30) Priorität: 24.02.2006 DE 102006008643
(43) Veröffentlichungstag der Anmeldung: 10.12.2008
(73) Patentinhaber: Robert Bosch GmbH, 70442 Stuttgart (DE)
(72) Erfinder: FALKENSTEIN, Jens-Werner, 73434 Aalen (DE); HUBER, Thomas, 74915 Daisbach (DE)
(86) Internationale Anmeldenummer: PCT/EP2007/050865
(87) Internationale Veröffentlichungsnummer: WO 2007/099002

(56) Entgegenhaltungen:
- EP-A- 1 717 084
- WO-A-2006/048102
- DE-A1- 4 446 485
- DE-A1- 10 237 817
- US-A1- 2002 138 182

## Beschreibung

### Stand der Technik

Die Erfindung geht aus von einem Verfahren zum Betreiben eines Hybridfahrzeugs nach dem Oberbegriff des Anspruchs 1.

Die DE102 03 04 A1 offenbart ein Verfahren zum Einstellen eines Betriebspunkts eines Hybridfahrzeugs, bei dem eine Verbrennungskraftmaschine mit zwei Elektromaschinen wirkverbunden ist.

In derartigen elektrischen Hybridfahrzeugen wird ein positives Antriebsmoment, das zum Antreiben und/oder Beschleunigen des Fahrzeugs notwendig ist, durch die Kombination von Verbrennungskraftmaschine und einer oder mehrerer Elektromaschinen erzeugt und wird im Folgenden mit Antriebsstrangmoment bezeichnet.

Bei bekannten Hybridfahrzeugen wird das Antriebsstrangmoment im Wesentlichen von der Verbrennungskraftmaschine erzeugt, die Elektromaschine(n) werden dazu eingesetzt, Anforderungen des elektrischen Bordnetzes und/oder der Batterie nach elektrischer Energiebereitstellung und/oder -abnahme zu erfüllen.

Bei negativen Antriebsstrangmomenten wird die Verbrennungskraftmaschine nach Möglichkeit im Schubbetrieb betrieben. Aus energetischen Gründen ist der Schubbetrieb der Verbrennungskraftmaschine bei positiven Antriebsstrangmomenten häufig wenig sinnvoll, denn der Kraftstoffeinsparung bei der Verbrennungskraftmaschine steht ein erhöhter elektrischer Energiebedarf der Elektromaschine(n) gegenüber. Der Schubbetrieb ist jedoch Voraussetzung für bestimmte Diagnosen und Adaptionen in der Motorsteuerung.

Die Druckschrift D1 (DE4446485) wird als nächstliegender Stand der Technik angesehen und offenbart die Merkmale der Präambel des unabhängigen Anspruchs 1.

### Vorteile der Erfindung

Bei dem erfindungsgemäßen Verfahren zum Betreiben eines Fahrzeugs mit einem Hybridantrieb wird zur Realisierung eines positiven Antriebsstrangsollmoments das positive Antriebsstrangsollmoment weitestgehend durch die Elektromaschine aufgebracht und die Verbrennungskraftmaschine möglichst mit geringem Moment oder in ihrem Schubbetrieb betrieben. Vorteilhaft kann die Verbrennungskraftmaschine in einem Hybridfahrzeug auch bei positiven Antriebsstrangmomenten im Schubbetrieb betrieben werden, wenn eine Anforderung dazu vorliegt. Das positive Antriebsstrangmoment kann dann im Wesentlichen durch geeignete Ansteuerung der Elektromaschine(n) realisiert werden.

Änderungen im abgegebenen Moment der Verbrennungskraftmaschine beim Übergang zwischen Schubbetrieb und befeuertem Betrieb der Verbrennungskraftmaschine können durch geeignete Ansteuerung der Elektromaschine(n) in ihrer Auswirkung auf das Antriebsstrangmoment so gut wie möglich kompensiert werden.

Beim Wechsel zwischen Schubbetrieb und befeuertem Betrieb soll durch geeignete Ansteuerung der Elektromaschine(n) eine Auswirkung des auftretenden Momentensprungs an der Kurbelwelle der Verbrennungskraftmaschine in ihrer Wirkung auf das Antriebsstrangmoment minimiert werden.

Zur Generierung einer Schubanforderung der Verbrennungskraftmaschine kann günstigerweise eine Differenz zwischen angefordertem Antriebssollmoment und Schleppmoment der Verbrennungskraftmaschine mit einem maximal möglichen Elektromaschinenmoment multipliziert mit einem applizierbaren Wert verglichen werden.

Bevorzugt wird, falls die Differenz zwischen dem Antriebssollmoment und dem Schleppmoment kleiner ist als das Produkt von Elektromaschinenmoment und applizierbarem Wert und ein Schubbetriebwunsch vorliegt, die Schubanforderung generiert. Zweckmäßigerweise wird der Schubbetriebwunsch von einer Motorsteuerung gesetzt.

Bevorzugt wird, falls keine Schubanforderung vorliegt, an der Verbrennungskraftmaschine ein Sollmoment aus einer Maximalwertauswahl eines vorgegebenen Moments in Abhängigkeit vom geforderten Antriebs-Sollmoment und einem minimal möglichen Moment der Verbrennungskraftmaschine im befeuerten Betrieb ausgegeben.

In einem weiteren Verfahrensschritt wird bei aktiver Schubanforderung an der Verbrennungskraftmaschine ein Sollmoment übergeben, das dem Schleppmoment der Verbrennungskraftmaschine bei der aktuellen Drehzahl entspricht.

In einem weiteren Verfahrensschritt werden die Übergänge zwischen dem Sollmoment an der Verbrennungskraftmaschine im Fall ohne Schubanforderung und dem Sollmoment an der Verbrennungskraftmaschine bei Schubanforderung rampenförmig gestaltet.

Bevorzugt wird bei unterschiedlicher Dynamik in den Momentenansteuerungen von Verbrennungskraftmaschine und Elektromaschine eine Kompensation des Momentensprungs bei den Übergängen zwischen dem Sollmoment an der Verbrennungskraftmaschine im Fall ohne Schubanforderung und dem Sollmoment an der Verbrennungskraftmaschine bei Schubanforderung in der Steuerung vorgesehen. Dabei kann der rampenförmige Übergang im Sollmoment für die Verbrennungskraftmaschine zeitlich versetzt zu einem entsprechenden Übergang im Sollmoment für die Elektromaschine erfolgen. Bevorzugt wird der zeitliche Versatz anhand des Dynamikunterschieds in den Momentenansteuerungen ermittelt.

Die Erfindung kann vorteilhaft bei Hybridfahrzeugen eingesetzt werden, bei denen die Drehmomente einer Verbrennungskraftmaschine und einer oder mehrerer Elektromaschine(n) in Kombination ein Antriebsstrangmoment ergeben.

### Zeichnungen

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand von einem in Zeichnungen dargestellten Ausführungsbeispiel der Erfindung.

Im Folgenden zeigen:
- Fig. 1: beispielhaft einen parallelen Hybridantrieb;
- Fig. 2: schematisch eine Generierung einer Schubanforderung; und
- Fig. 3: schematisch eine Umsetzung einer Schubanforderung.

### Beschreibung des Ausführungsbeispiels

Aufbau und Wirkungsweise eines derartigen Hybridantriebs sind allgemein bekannt, so dass im Rahmen der vorliegenden Beschreibung nicht näher darauf eingegangen wird.

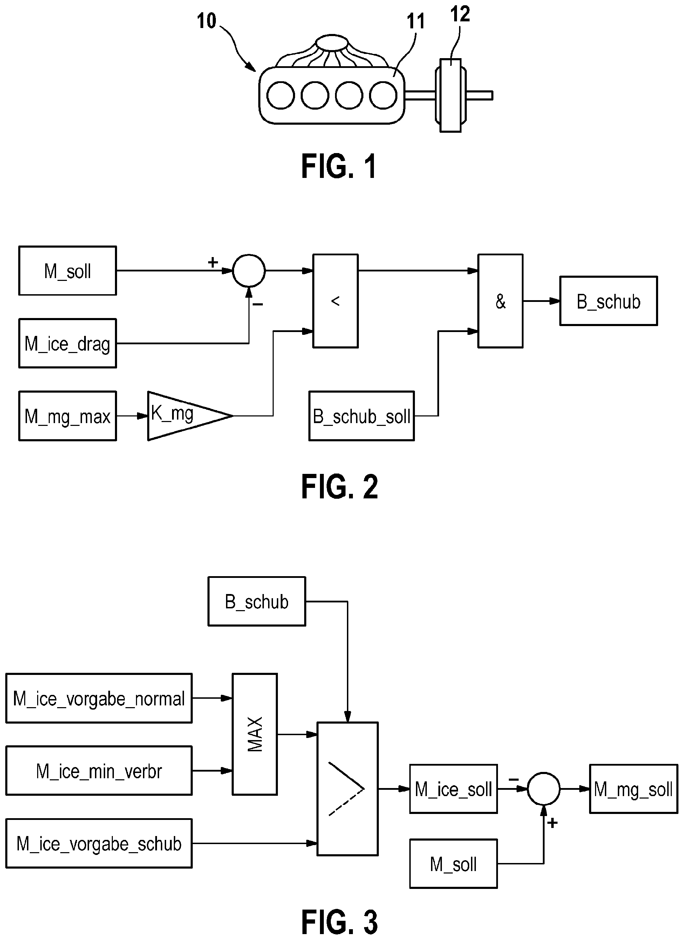

Im Folgenden wird als Realisierungsbeispiel für die Erfindung die Umsetzung an einem Parallelhybrid-Antriebsstrang 10 bestehend aus einer Verbrennungskraftmaschine 11 und einer Elektromaschine 12 (siehe Fig. 1) beschrieben.

Bei dem Parallelhybrid-Antriebsstrang 10 ergibt sich ein Antriebsstrangmoment M_drivetrain aus der Addition des Verbrennungskraftmaschinenmoments M_ice und des Elektromaschinenmoments M_mg: M_drivetrain=M_ice+M_mg. Betrachtet werden im Folgenden nur positive Antriebsstrangsollmomente M_soll>0. Es gilt M_soll=M_ice_soll+M_mg_soll.

Zur Generierung einer Anforderung zum Schubbetrieb der Verbrennungskraftmaschine 11 (siehe Fig. 2) wird die Differenz zwischen angefordertem Antriebsstrangsollmoment M_soll und dem Verbrennungskraftmaschinenschleppmoment M_ice_drag (als negatives Moment definiert) mit dem maximal möglichen Elektromaschinenmoment M_mg_max multipliziert mit einem applizierbaren Wert K_mg verglichen. Dabei berücksichtigt das maximal mögliche Elektromaschinenmoment M_mg_max den Betriebszustand der Elektromaschine 12, wie z.B. verschiedene Spannungen, verschiedene Ströme, Drehzahl, Temperatur und/oder Zustände des elektrischen Bordnetzes und der Batterie, wie z.B. momentaner Leistungsbedarf der elektrischen Verbraucher, Batterieladezustand und Batterietemperatur.

Bei geringem Ladezustand der Batterie ist z.B. das maximal mögliche Elektromaschinenmoment M_mg_max gering, um weiteres Entladen der Batterie zu vermeiden. Bei hohem Ladezustand der Batterie wird M_mg_max angehoben, die Batterie kann elektrische Leistung zur Verfügung stellen.

Ist die Differenz zwischen M_soll und M_ice_drag kleiner als das Produkt von M_mg_max und K_mg, und liegt zudem ein Wunsch nach Schubbetrieb B_schub_soll vor, wird die Schubanforderung B_schub generiert. Die Größe B_schub_soll kann dabei von der Motorsteuerung gesetzt werden, um Diagnosen oder Adaptionen gezielt auszuführen.

Die Umsetzung der Schubanforderung B_schub in Sollmomente für die Verbrennungskraftmaschine 11 und die Elektromaschine 12 beschreibt Fig. 3. Liegt keine Schubanforderung vor, also B_schub=false wird an die Verbrennungskraftmaschine ein Sollmoment M_ice_soll aus der Maximalwertauswahl eines vorgegebenen Moments M_ice_vorgabe_normal in Abhängigkeit vom geforderten Sollmoment M_soll und einem minimal möglichen Moment der Verbrennungskraftmaschine 11 im befeuerten Betrieb M_ice_min_verb, entweder mit oder ohne Beeinflussung des Zündwinkelwirkungsgrades, ausgegeben. Die Verbrennungskraftmaschine 11 ist damit in der Lage, das angeforderte Sollmoment näherungsweise umzusetzen.

Bei aktiver Schubanforderung, also B_schub=true, wird an die Verbrennungskraftmaschine 11 ein Sollmoment M_ice_soll=M_ice_vorgabe_schub übergeben, das dem Schleppmoment der Verbrennungskraftmaschine 11 bei der aktuellen Drehzahl entspricht. Damit wird die Verbrennungskraftmaschine 11 in den Schubbetrieb überführt und das tatsächliche Moment der Verbrennungskraftmaschine 11 entspricht der Momentenvorgabe.

Damit kann das Sollmoment für die Elektromaschine 12 aus der Beziehung M_mg_soll=M_soll-M_ice_soll gewonnen werden.

Wenn also die Verbrennungskraftmaschine 11 ihr Sollmoment M_ice_soll umsetzt und die Elektromaschine 12 ihr Sollmoment M_mg_soll schnell einstellen kann, wird durch diese Ansteuerung der Momentensprung beim Übergang von Verbrennungsbetrieb in Schubbetrieb optimal kompensiert.

Günstig ist weiterhin, den Übergang zwischen den Momenten von M_ice_soll=M_ice_vorgabe_normal (eventuell durch Maximalwertauswahl Max(M_ice_vorgabe_normal, M_ice_min_verbr.) mit M_ice_min_verbr. korrigiert) nach M_ice_soll=M_ice_vorgabe_schub rampenförmig zu gestalten. Mittels Spätverstellung des Zündwinkels bzw. Ausblendung einzelner Zylinder folgt das Istdrehmoment M_ice der Verbrennungskraftmaschine 11 dann näherungsweise ebenfalls rampenförmig dem rampenförmigen Sollmoment M_ice_soll. Weiter ist günstig, bei unterschiedlicher Dynamik in den Momentenansteuerungen von Verbrennungskraftmaschine 11 und Elektromaschine 12 eine Kompensation in der Steuerung vorzusehen, z.B. indem der rampenförmige Übergang im Sollmoment M_ice_soll für die Verbrennungskraftmaschine 11 zeitlich versetzt zu dem entsprechenden Übergang im Sollmoment M_mg_soll für die Elektromaschine 12 vorgegeben wird. Erfolgt die Momentenansteuerung der Elektromaschine 12 gegenüber der Momentenansteuerung der Verbrennungskraftmaschine mit größerer Verzögerung, so gibt die Steuerung den rampenförmigen Übergang von M_mg_soll zeitlich vor dem entsprechenden Übergang von M_ice_soll vor. Der zeitliche Versatz wird anhand des Dynamikunterschieds in den Momentenansteuerungen ermittelt.

## Patentansprüche

1. Verfahren zum Betreiben eines Fahrzeugs mit einem Hybridantrieb (10), wobei der Hybridantrieb (10) als Antriebsmaschinen eine Verbrennungskraftmaschine (11) und eine Elektromaschine (12) aufweist, wobei die Antriebsmaschinen zusammenwirken, wobei zur Realisierung eines positiven Antriebsstrangsollmoments (M_soll) das positive Antriebsstrangsollmoment (M_soll) durch die Elektromaschine (12) aufgebracht wird und die Verbrennungskraftmaschine (11) in ihrem Schubbetrieb betrieben wird, **dadurch gekennzeichnet, dass** zur Generierung einer Schubanforderung (B_schub) der Verbrennungskraftmaschine (11) zur gezielten Ausführung von Diagnosen und Adaptationen in der Motorsteuerung eine Differenz zwischen angefordertem Antriebssollmoment (M_soll) und Schleppmoment (M_ice_drag) der Verbrennungskraftmaschine (11) mit einem maximal möglichen Elektromaschinenmoment (M_mg_max) multipliziert mit einem applizierbaren Wert (K_mg) verglichen wird, wobei das maximal mögliche Elektromaschinenmoment (M_mg_max) die Spannungen, Ströme, Drehzahl und Temperatur der Elektromaschine (12), den momentanen Leistungsbedarf der elektrischen Verbraucher des elektrischen Bordnetzes sowie den Batterieladezustand und die Batterietemperatur berücksichtigt und, falls die Differenz zwischen dem Antriebssollmoment (M-soll) und dem Schleppmoment (M_ice_drag) kleiner ist als das Produkt von Elektromaschinenmoment (M_mg_max) und applizierbarem Wert (K_mg) und ein Schubbetriebwunsch (B_schub_soll) vorliegt, die Schubanforderung (B_schub) generiert wird. (B_schub_soll) vorliegt, die Schubanforderung (B_schub) generiert wird.

2. Verfahren nach Anspruch 1, **dadurch gekennzeichnet, dass** der Schubbetriebwunsch (B_schub_soll) von einer Motorsteuerung gesetzt wird.

3. Verfahren nach einem der Ansprüche 1 bis 2, **dadurch gekennzeichnet, dass**, falls keine Schubanforderung (B_schub) vorliegt, an der Verbrennungskraftmaschine (11) ein Sollmoment (M_ice_soll) aus einer Maximalwertauswahl eines vorgegebenen Moments (M_ice_vorgabe_normal) in Abhängigkeit vom geforderten Sollmoment (M_soll) und einem minimal möglichen Moment (M_ice_min_verb) der Verbrennungskraftmaschine (11) im befeuerten Betrieb ausgegeben wird.

4. Verfahren nach einem der Ansprüche 1 bis 3, **dadurch gekennzeichnet, dass** bei aktiver Schubanforderung (B_schub) an der Verbrennungskraftmaschine (11) ein Sollmoment (M_ice_vorgabe_schub) übergeben wird, das dem Schleppmoment der Verbrennungskraftmaschine bei der aktuellen Drehzahl entspricht.

5. Verfahren nach einem der Ansprüche 1 bis 4, **dadurch gekennzeichnet, dass** mindestens am Übergang zwischen vorgegebenem Moment (Max(M_ice_vorgabe_normal, M_ice_min_verbr.)) und Sollmoment (M_ice_vorgabe_schub) bei Schubanforderung (B_schub) rampenförmig gestaltet wird.

6. Verfahren nach einem der Ansprüche 1 bis 5, **dadurch gekennzeichnet, dass** bei unterschiedlicher Dynamik in den Momentenansteuerungen von Verbrennungskraftmaschine (11) und Elektromaschine (12) eine Kompensation des Momentensprungs bei Übergängen zwischen vorgegebenem Moment (Max(M_ice_vorgabe_normal, M_ice_min_verbr.)) und Sollmoment (M_ice_vorgabe_schub) bei Schubanforderung (B_schub) in der Steuerung vorgesehen ist.

7. Verfahren nach einem der Ansprüche 1 bis 6, **dadurch gekennzeichnet, dass** der rampenförmige Übergang im Sollmoment (M_ice_soll) für die Verbrennungskraftmaschine (11) zeitlich versetzt zu einem entsprechenden Übergang im Sollmoment (M_mg_soll) für die Elektromaschine (12) erfolgt.

8. Verfahren nach Anspruch 7 **dadurch gekennzeichnet, dass** der zeitliche Versatz anhand des Dynamikunterschieds in den Momentenansteuerungen ermittelt wird.

## Claims

1. Method for operating a vehicle with a hybrid drive (10), wherein the hybrid drive (10) has as drive machines an internal combustion engine (11) and an electric machine (12), wherein the drive machines interact, wherein in order to implement a positive drive train target torque (M_soll) the positive drive train target torque (M_soll) is applied by the electric machine (12), and the internal combustion engine (11) is operated in its overrun mode, **characterized in that** in order to generate a thrust request (B_schub) of the internal combustion engine (11) for the targeted implementation of diagnostics and adaptations in the engine controller a difference between the requested target drive torque (M_soll) and the drag torque (M_ice_drag) of the internal combustion engine (11) is multiplied by a maximum possible electric machine torque (M_mg_max) and compared with an applicable value (K_mg), wherein the maximum possible electric machine torque (M_mg_max) takes into account the voltages, currents, rotational speed and temperature of the electric machine (12), the instantaneous power demand of the electric consumers of the electric on-board power system and the state of charge of the battery and the battery temperature, and if the difference between the target drive torque (M_soll) and the drag torque (M_ice_drag) is less than the product of the electric machine torque (M_mg_max) and the applicable value (K_mg) and a thrust operating request (M_schub_soll), is present, the thrust request (B_schub) is generated.

2. Method according to Claim 1, **characterized in that** the thrust operating request (B_schub_soll) is set by an engine controller.

3. Method according to one of Claims 1 to 2, **characterized in that** if there is no thrust request (B_schub) present, target torque (M_ice_soll) composed of a maximum value selection of a predefined torque (M_ice_vorgabe_normal) is output to the internal combustion engine (11) as a function of the requested target torque (M_soll) and the minimum possible torque (M_ice_min_verb) of the internal combustion engine (11) in the energized mode.

4. Method according to one of Claims 1 to 3, **characterized in that** when the thrust request (B_schub) is active at the internal combustion engine (11) a target torque (M_ice_vorgabe_schub) which corresponds to the drag torque of the internal combustion engine at the current rotational speed is transferred.

5. Method according to one of Claims 1 to 4, **characterized in that** the configuration is in the form of a ramp at least at the transfer between the predefined torque (Max(M_ice_vorgabe_normal, M_ice_min_verbr.)) and the target torque (M_ice_vorgabe_schub) in the case of a thrust request (B_schub).

6. Method according to one of Claims 1 to 5, **characterized in that** when there are different dynamics in the torque actuations of the internal combustion engine (11) and electric machine (12) the torque jump is compensated at transitions between the predefined torque (Max(M_ice_vorgabe_normal, M_ice_min_verbr.)) and the target torque (M_ice_vorgabe_schub) in the case of a thrust request (B_schub) in the controller.

7. Method according to one of Claims 1 to 6, **characterized in that** the ramp-shaped transition in the target torque (M_ice_soll) for the internal combustion engine (11) takes place with offset timing with respect to a corresponding transition in the target torque (M_mg_soll) for the electric machine (12).

8. Method according to Claim 7, **characterized in that** the chronological offset is determined on the basis of the difference in dynamics in the engine actuation operations.

## Revendications

1. Procédé pour faire fonctionner un véhicule avec un entraînement hybride (10), dans lequel l'entraînement hybride (10) présente comme machines d'entraînement un moteur à combustion interne (11) et une machine électrique (12), dans lequel les machines d'entraînement coopèrent, dans lequel pour la réalisation d'un couple théorique de train d'entraînement positif (M_théor) on applique le couple théorique de train d'entraînement positif (M_théor) au moyen de la machine électrique (12) et on fait fonctionner le moteur à combustion interne (11) dans son fonctionnement de poussée, **caractérisé en ce que** pour générer une demande de poussée (B_poussée) du moteur à combustion interne (11) pour l'exécution appropriée de diagnostics et d'adaptations dans la commande du moteur, on compare une différence entre le couple théorique d'entraînement demandé (M_théor) et le couple de traînée (M_mci_traînée) du moteur à combustion interne (11) avec un couple maximal possible de la machine électrique (M_mg_max) multiplié par une valeur applicable (K_mg), dans lequel le couple maximal possible de la machine électrique (M_mg_max) tient compte des tensions, des courants, du nombre de tours et de la température de la machine électrique (12), de la demande de puissance instantanée des consommateurs électriques du réseau électrique embarqué ainsi que de l'état de la batterie et de la température de la batterie et, dans le cas où la différence entre le couple théorique d'entraînement (M_théor) et le couple de traînée (M_mci_traînée) est inférieure au produit du couple de la machine électrique (M_mg_max) et de la valeur applicable (K_mg) et où il existe une demande de fonctionnement de poussée (B_poussée_théor), on génère la demande de poussée (B_shub).

2. Procédé selon la revendication 1, **caractérisé en ce que** la demande de fonctionnement de poussée (B_poussée_théor) est émise par une commande du moteur.

3. Procédé selon une des revendications 1 à 2, **caractérisé en ce que**, dans le cas où il n'existe pas de demande de poussée (B_poussée), on produit au moteur à combustion interne (11) un couple théorique (M_mci_théor) parmi une sélection de valeur maximale d'un couple prédéterminé (M_mci_objectif_normal) en fonction du couple théorique demandé (M_théor) et d'un couple minimal possible (M_mci_min_consom) du moteur à combustion interne (11) en fonctionnement avec combustion.

4. Procédé selon l'une quelconque des revendications 1 à 3, **caractérisé en ce qu'**avec une demande de poussé e active (B_poussée), on transmet au moteur à combustion interne (11) un couple théorique (M_mci_objectif_poussée) qui correspond au couple de traînée du moteur à combustion interne pour le nombre de tours actuel.

5. Procédé selon l'une quelconque des revendications 1 à 4, **caractérisé en ce qu'**au moins la transition entre le couple prédéterminé (Max(M_mci_objectif_normal, M_mci_min_consom)) et le couple théorique (M_mci_objectif_poussée) est réalisée en forme de rampe en cas de demande de poussée (B_poussée).

6. Procédé selon l'une quelconque des revendications 1 à 5, **caractérisé en ce qu'**en cas de dynamique différente dans les commandes de couple du moteur à combustion interne (11) et de la machine électrique (12), il est prévu dans la commande une compensation du saut de couple lors de transitions entre le couple prédéterminé (Max(M_mci_objectif_normal, M_mci_min_consom)) et le couple théorique (M_mci_objectif_poussée) en cas de demande de poussée (B_poussée).

7. Procédé selon l'une quelconque des revendications 1 à 6, **caractérisé en ce que** la transition en forme de rampe dans le couple théorique (M_mci_théor) pour le moteur à combustion interne (11) est décalée dans le temps vers une transition correspondante dans le couple théorique (M_mg_théor) pour la machine électrique (12).

8. Procédé selon la revendication 7, **caractérisé en ce que** l'on détermine le décalage temporel à l'aide de la différence de dynamique dans les commandes de couple.
